# EUROPEAN PATENT APPLICATION

(11) **EP 2 849 312 A1**
(43) Date of publication of application: **18.03.2015**
(21) Application number: 12874032.1
(22) Date of filing: 12.04.2012
(51) Int. Cl.: H02J 7/02, H02J 7/00

(54) **VEHICLE CONTROL SYSTEM**

(71) Applicant: Hitachi, Ltd., Tokyo 100-8280 (JP)
(72) Inventor: ODA, Atsushi, Tokyo 100-8280 (JP); MIYAUCHI, Tsutomu, Tokyo 100-8280 (JP); SUGAWARA, Toshiharu, Tokyo 100-8280 (JP); SUZUKI, Motonari, Tokyo 100-8280 (JP)
(74) Representative: Gill, Stephen Charles
(86) International application number: PCT/JP2012/060056
(87) International publication number: WO 2013/153659

(57) **Abstract**

This invention charges an amount of electric power required for the next trip while extending the life of a power storage device, and enables reliable catenary-less travel to the next power storage device. Provided is a vehicle control system for a vehicle having a power storage device (105) which receives a supply of electric power from a charging facility (106) installed aboveground, and which is capable of traveling on a set route such as on a railroad track or a road surface using the power storage device (105) as a motive power source. When the vehicle arrives at one charging facility (106), a required electric power amount prediction portion (206) calculates a required amount of electric power for enabling travel until the next charging facility is reached. After restricting the charging current from the charging facility (106) which the vehicle arrived at to a current that is no more than a maximum charging current that is defined based on the life of the power storage device using a maximum charging current holding portion (210), a display (107) is used to perform support so that the required amount of electric power calculated by the required electric power amount prediction portion (206) is secured.

## Description

### Technical Field

The present invention relates to catenary-less transportation system in which, in particular, a power storage device is mounted in a vehicle and receives a supply of electric power from a charging facility that is installed aboveground, and in which the vehicle travels on a set route on a railroad track or a road surface using the power storage device as a motive power source.

### Background Art

In recent years, catenary-less transportation systems in which a vehicle travels without receiving the supply of electric power from a catenary have been proposed with respect to transportation systems in which a vehicle travels on a set route on a railroad track or a road surface.

In such kind of catenary-less transportation system, a power storage device is mounted in a vehicle, and when the vehicle is stopped at a train station or the like the power storage device is charged with an amount of electric power that is required for the next trip from a charging facility that is installed aboveground.

Patent Literature 1 discloses technology that predicts the next travel route, predicts the required amount of power consumption, creates a charging schedule based on the aforementioned amount of power consumption, and controls charging of the power storage device based on the charging schedule.

### Citation List

### Patent Literature

Patent Literature 1: Japanese Patent Laid-Open Publication No. 2011-188731

### Summary of Invention

### Technical Problem

Generally, when charging a power storage device, in order to extend the life of the power storage device it is necessary to make a charging current per unit of time equal to or less than a maximum charging current that is defined based on the life of the relevant power storage device. However, according to the technology disclosed in Patent Literature 1, since control is performed so as to complete charging of the amount of power consumption that is required for the next trip before the start of the next trip, in a case where the period of time until the next trip starts is short, it is necessary to perform quick charging, and consequently the charging current per unit of time is large and there is a possibility that the life of the power storage device will be shortened.

The present invention has been conceived in view of the above described problem, and an object of the present invention is to charge a power storage device with an amount of electric power required for a next trip so a vehicle reliably travels as far as the next charging facility, while extending the life of the power storage device.

### Solution to Problem

To solve the above described problem, the present invention adopts a configuration in which, in a catenary-less transportation system in which a power storage device is mounted in a vehicle and receives a supply of electric power from a charging device that is installed aboveground, and in which the vehicle travels on a set route such as on a railroad track or a road surface by utilizing the power storage device as a motive power source, support means is provided for supporting so that a charging amount that is required for a next trip can be secured while charging with a maximum charging current that is defined based on the life of the power storage device. More specifically, the vehicle control system of the present invention has the following technical features. That is:
(1) in a vehicle control system for a vehicle in which a power storage device is mounted and which receives a supply of electric power from a charging facility that is installed aboveground, and is capable of traveling on a set route such as on a railroad track or a road surface by utilizing the power storage device as a motive power source, there are provided: calculation means for, when the vehicle arrives at one charging facility, calculating a required amount of electric power to enable travel until a next charging facility is reached; and support means for supporting so that, after restricting a charging current from the charging facility at which the vehicle arrives to a current that is less than or equal to a maximum charging current that is defined based on a life of the power storage device, the required amount of electric power that is calculated by the calculation means is secured by means of a charging amount from the charging facility.
(2) In the above described vehicle control system, a configuration is adopted so as to calculate the required amount of electric power based on a gradient, a curvature radius and a running curve along a route until a next charging facility is reached as well as a vehicle weight that is predicted with respect to the route, and determine whether or not the required amount of electric power is charged by performing a comparison with a current state of charge of the power storage device.
(3) In the above described vehicle control system, a configuration is adopted which includes a memory device in which the required amount of electric power is stored, wherein the vehicle control system corrects the required amount of electric power that is stored in the memory device by means of a vehicle weight that is predicted with respect to a route until a next charging facility is reached, and determines whether or not the corrected required amount of electric power is charged by performing a comparison with a current state of charge of the power storage device.
(4) In the above described vehicle control system, the support means is configured as means for notifying a driver in a case where it is determined that the required amount of electric power is not charged.
(5) In the above described vehicle control system, the support means is configured as means for, in a case where the vehicle is stopped and the required amount of electric power is not charged, locking a master controller of the vehicle so that the master controller does not move to an acceleration position to thereby block departure of the vehicle.
(6) In the above described vehicle control system, the support means is configured as means for, in a case where the vehicle is stopped and the required amount of electric power is not charged, outputting a brake command to a brake device of the vehicle to thereby block departure of the vehicle.
(7) In the above described vehicle control system, the support means is configured as means for, at a time of departure of the vehicle, in a case where an amount of electric power that is required in order to travel according to a running curve that is set with respect to a route until a next charging facility is reached is not charged, notifying to a driver a running curve that enables the vehicle to reach the next charging facility using a state of charge of the power storage device at the time of departure of the vehicle.
(8) In the above described vehicle control system, second calculation means is further provided for, at a time of departure of the vehicle, calculating a required amount of electric power that enables travel from the next charging facility until reaching a subsequent charging facility that is next after the next charging facility, wherein the support means is configured as means for, in a case where a required amount of electric power that the second calculation means calculates cannot be charged within a predetermined charging time period at the next charging facility, notifying a driver so as to arrive earlier than scheduled at the next charging facility to secure a charging time period at the next charging facility.
(9) In the above described vehicle control system, the charging facility is provided in a predetermined section of a route that links stopping points of the vehicle, and the support means is configured as means for calculating a vehicle speed at a time of traveling past a current charging facility so that the required amount of electric power can be secured by means of the charging facility that the vehicle is currently traveling past, and notifying the vehicle speed to a driver.
(10) In the above described vehicle control system, the support means is configured as means for calculating a vehicle speed at which the required amount of electric power can be secured by means of the charging facility that the vehicle is currently traveling past, based on a current vehicle speed, a current position, and a section length of the current charging facility.

### Advantageous Effects of Invention

According to the present invention, since charging is performed so as not to exceed a maximum charging current that is defined based on the life of a power storage device, the life of the power storage device can be extended. Further, since support such as notifying a driver whether or not a charging amount that is required for the next trip has been charged is performed, departure of a vehicle in a state in which the required charging amount has been secured is enabled, and it is also possible to block departure and, furthermore, to enable travel to the next charging facility using a charged amount at the time of departure.

### Brief Description of Drawings

[FIG. 1] FIG. 1 is a system configuration diagram of Embodiment 1.
[FIG. 2] FIG. 2 is a block diagram of a vehicle control device according to Embodiment 1.
[FIG. 3] FIG. 3 is a view illustrating display contents of a display device according to Embodiment 1.
[FIG. 4] FIG. 4 is a view illustrating display contents of a display device according to Embodiment 2.
[FIG. 5] FIG. 5 is a view illustrating display contents of a display device according to Embodiment 3.
[FIG. 6] FIG. 6 is a system configuration diagram of Embodiment 4.
[FIG. 7] FIG. 7 is a system configuration diagram of Embodiment 5.
[FIG. 8] FIG. 8 is a view illustrating display contents of a display device according to Embodiment 6.
[FIG. 9] FIG. 9 is a view illustrating display contents of a display device according to Embodiment 7.
[FIG. 10] FIG. 10 is a system configuration diagram of Embodiment 8.
[FIG. 11] FIG. 11 is a view illustrating the arrangement of a charging facility according to Embodiment 8.
[FIG. 12] FIG. 12 is a system configuration diagram according to Embodiment 8.
[FIG. 13] FIG. 13 is a view illustrating display contents of a display device according to Embodiment 8.

### Description of Embodiments

Embodiments of the present invention will be described hereunder using the accompanying drawings.

### Embodiments

### [Embodiment 1]

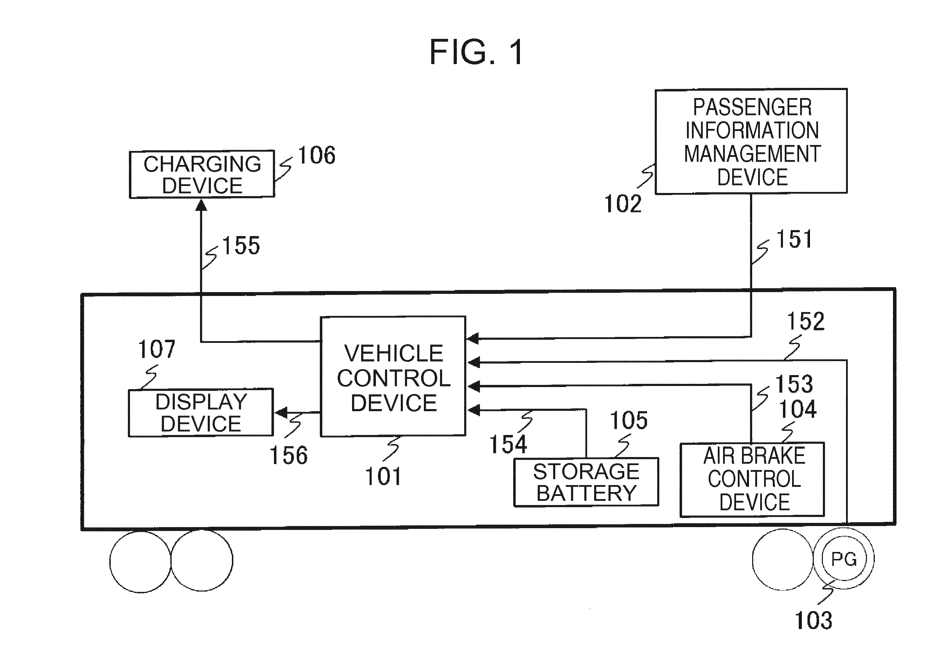

FIG. 1 is a configuration diagram illustrating Embodiment 1 of the present invention. An example of the system configuration of the present invention will now be described using FIG. 1.

Note that, although the following embodiments are described taking as an example a case where a railroad vehicle, including a monorail vehicle, travels between stations, the present invention is not limited thereto, and for example the present invention is also applicable to a bus that travels on a previously determined route.

A vehicle control device (101) receives passenger information (151) regarding a boarding station and an alighting station for each passenger from a passenger information management device (102).

The passenger information management device (102) is a device that acquires the passenger information (151) by acquiring passenger ticket information of passengers through an automatic ticket gate or the like, and it is sufficient that the passenger information management device (102) is a device that can acquire information regarding a boarding station and an alighting station for each passenger, and it does not matter which acquisition method is used, such as acquisition of statistical data regarding the number of passengers boarding and alighting for respective time periods at each station.

Further, all devices that hold the passenger information (151) correspond to the passenger information management device (102), and an installation location or form of the passenger information management device (102) do not matter. In short, either a wired or a wireless method may be used as the acquisition method as long as it is possible for the vehicle control device (101) to acquire the passenger information (151).

Next, the vehicle control device (101) acquires a vehicle speed (152) from a speed sensor (103) such as a pulse generator (PG) that is mounted on an end of a rotary shaft of an electric motor that drives the vehicle or an end of an axle. The vehicle control device (101) integrates the vehicle speed (152), and uses the integrated value to determine the current position of the vehicle.

The means by which the vehicle control device (101) acquires the vehicle speed (152) is not limited to the speed sensor (103), and the acquisition source does not matter as long as the vehicle control device (101) can acquire the vehicle speed (152). Further, with respect to the method of determining the current position of the vehicle, apart from integrating the vehicle speed (152), for example, the current position may be acquired directly from an operation management device, and the method of determining the current position does not matter as long as the vehicle control device (101) can ascertain the current position, including acquiring the current position by GPS.

Next, the vehicle control device (101) acquires the vehicle weight (153) from an air brake control device (104). Although according to the present embodiment the vehicle weight (153) is calculated using a pressure sensor that is provided inside an air spring that controls the height of the vehicle utilizing an air pressure, the vehicle weight (153) may be acquired from the air brake control device (104) as is commonly used, or may be directly acquired from a weight sensor attached to the vehicle or an air spring. In short, the device and principle used to calculate the vehicle weight (153) do not matter as long as the vehicle weight (153) can be acquired.

The vehicle control device (101) acquires a current amount of charged electric power (154) that is the amount of charged electric power at the current time point, from the power storage device (105) that is power storage equipment. Note that, although according to the present embodiment the current amount of charged electric power (154) is estimated based on the power storage device voltage, the current amount of charged electric power (154) may be estimated by other means, for example, based on an integrated value of an amount of output electric power and an integrated value of an amount of charged electric power. In short, it does not matter which principle is adopted as long as it is possible for the vehicle control device (101) to acquire the current amount of charged electric power (154).

The vehicle control device (101) calculates the amount of charged electric power required for the next trip and the available charging time based on the passenger information (151), the vehicle speed (152), the vehicle weight (153), and the current amount of charged electric power (154) that are acquired as described above.

Next, the vehicle control device (101) calculates a required charging current (155) per unit of time based on a maximum charging current that is defined for maintaining the life of the power storage device (105) to the maximum extent, the required amount of charged electric power, and the available charging time.

The vehicle control device (101) sends the required charging current (155) to a charging device (106) that controls charging to the power storage device (105).

The charging device (106) carries out charging to the power storage device (105) based on the required charging current (155). Note that, in the present embodiment it is assumed that the charging device (106) is installed in each stopping station of the railroad vehicle and, for example, a power feeding device is used that feeds a charging current to the power storage device (105) through a power collecting device provided in the railroad vehicle when the railroad vehicle is stopped.

Further, all devices that are capable of controlling charging to the power storage device (105) correspond to the charging device (106), and it does not matter what the installation location and form of these charging devices (106) are. Further, a wired or a wireless method may be as the acquisition method as long as the charging device (106) can acquire the required charging current (155).

Next, the vehicle control device (101) compares the current amount of charged electric power (154) with the amount of electric power required to travel as far as the next charging device (106). If the current amount of charged electric power (154) is insufficient relative to the required amount of electric power, since it is necessary to block departure of the railroad vehicle, according to the present embodiment, a display device (107) is used as support means for supporting so that the required amount of electric power is secured, and vehicle control device (101) sends a display request (156) to the display device (107). Upon receiving the display request (156), the display device (107) performs support so that the required amount of electric power is secured by the power storage device (105) by notifying the driver so as to delay departure relative to a predetermined departure time.

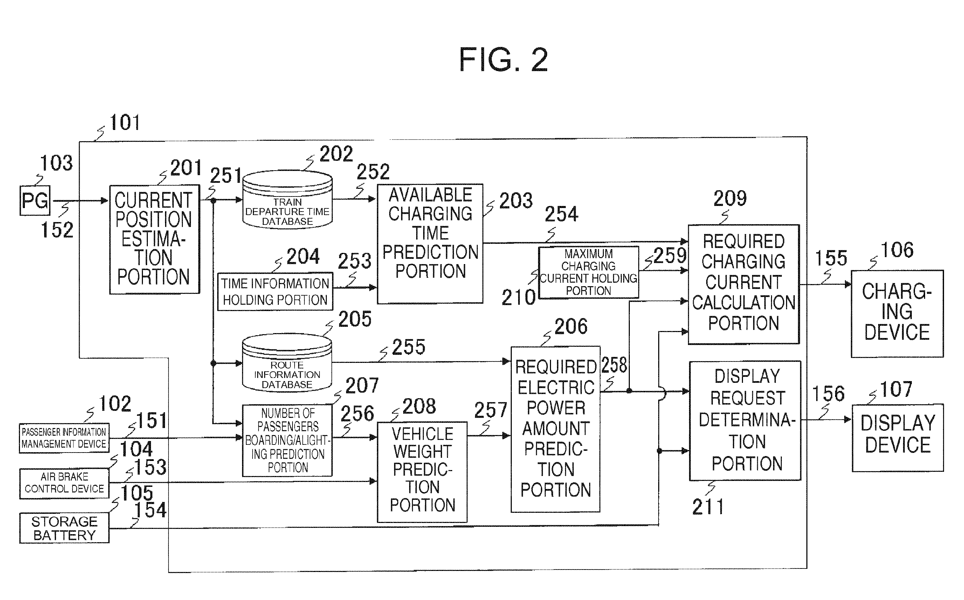

The detailed flow of processes inside the vehicle control device (101) according to Embodiment 1 is illustrated in FIG. 2.

The current position estimation portion (201) acquires the vehicle speed (152) from the speed sensor (103), calculates a travelled distance by performing time integration with respect to the vehicle speed (103), and estimates a current position (251) of its own vehicle. It is possible to accurately estimate the current position by correcting the current position at a predetermined kilometer marker of the stopping station each time the vehicle stops at a station.

Further, a travel timetable database (202) holds a travel timetable for the vehicle, and calculates a departure time (252) that is the time of departure of the vehicle from the current stopping station based on the current position (251), and sends the departure time (252) to the available charging time prediction portion (203).

A time information holding portion (204) manages the current time, and sends a current time (253) to the available charging time prediction portion (203). Upon receiving the current time (253), the available charging time prediction portion (203) calculates an available charging time (254), which is a time period that can be used for charging, based on the departure time (252) and the current time (253), and sends the available charging time (254) to a required charging current calculation portion (209).

A traveling information database (205) holds traveling information such as information regarding gradients, curvature radii, running curves, and stopping station information, and determines the next stopping station based on the current position (251), and sends traveling information (255) with respect to the traveling until the next stopping station to a required electric power amount prediction portion (206).

A number of passengers boarding/alighting prediction portion (207) determines the next stopping station based on the current position (251), and calculates the number of passengers alighting which is the number of passengers for which the current stopping station is the alighting station based on passenger information that was acquired at the preceding stopping stations.

Next, the number of passengers boarding/alighting prediction portion (207) acquires the passenger information (151) from the passenger information management device (102) that holds passenger information for the current stopping station, calculates the number of passengers boarding, and sends the number of passengers boarding and the number of passengers alighting as number of passengers boarding/alighting information (256) to the vehicle weight prediction portion (208).

Based on the number of passengers boarding/alighting information (256), the vehicle weight prediction portion (208) estimates a vehicle weight increase/decrease amount that is a change in the vehicle weight accompanying an increase/decrease in passengers at the current stopping station. Estimation of the vehicle weight using the number of passengers boarding/alighting information (256) may be performed by defining a body weight per passenger beforehand or may be performed using a method that utilizes a relational expression between the number of passengers boarding/alighting and the vehicle weight that is calculated based on past data. In short, it does not matter which principle is adopted as long as an increase or decrease in the vehicle weight can be ascertained based on the number of passengers boarding and alighting.

Next, the vehicle weight prediction portion (208) calculates a predicted vehicle weight (257) that is a predicted value of the vehicle weight for the next trip based on the current vehicle weight (153) and the vehicle weight increase/decrease amount, and sends the predicted vehicle weight (257) to the required electric power amount prediction portion (206).

The required electric power amount prediction portion (206) calculates a kinetic energy and a traveling resistance energy based on the traveling information (255) and the predicted vehicle weight (257), and predicts the amount of electric power required for the next trip while also taking into account the amount of electric power used for accessory equipment such as air conditioning equipment.

The required electric power amount prediction portion (206) sends the predicted required amount of electric power (258) to the required charging current calculation portion (209) and the display request determination portion (211).

Note that another method may also be used to predict the required amount of electric power, for example, a configuration may be adopted in which the amount of electric power required for the next trip is previously calculated under a predetermined vehicle weight condition, and the required amount of electric power is corrected using the predicted vehicle weight (257). In short, it does not matter which principle is adopted as long as it is possible to predict the amount of electric power that is required for the next trip.

The required charging current calculation portion (209) calculates a required amount of charged electric power that is the amount of electric power that should be charged for the next trip based on the required amount of electric power (258) and the current amount of charged electric power (154).

Next, the required charging current calculation portion (209) calculates a required charging current per unit of time by dividing the required amount of charged electric power by the available charging time (254) and the charging voltage, and acquires a maximum charging current (259) that is defined based on the life of the power storage device (105) from the maximum charging current holding portion (210) that holds the maximum charging current.

The required charging current calculation portion (209) compares the maximum charging current (259) and the required charging current that are acquired as described above, and if the required charging current does not exceed the maximum charging current (259), the required charging current calculation portion (209) sends the required charging current to the charging device (106) as the required charging current (155), while if the required charging current exceeds the maximum charging current (259), the required charging current calculation portion (209) sends the maximum charging current (259) to the charging device (106) as the required charging current (155).

During a period in which it is found upon comparing the required amount of electric power (258) and the current amount of charged electric power (154) that the current amount of charged electric power (154) is less than the required amount of electric power (258), it is necessary to block departure of the vehicle since there is a possibility that the state of charge of the power storage device (105) will run out before arriving at the next charging device.

Therefore, in a case where the vehicle is stopped and the current amount of charged electric power (154) is less than the required amount of electric power (258), the display request determination portion (211) sends the display request (156) to the display device (107).

Note that, acquisition or calculation of the current position (251), the departure time (252), the current time (253), the available charging time (254), the traveling information (255), the number of passengers boarding/alighting information (256), the predicted vehicle weight (257), the required amount of electric power (258), and the maximum charging current (259), as well as comparison of the required amount of electric power (258) and the current amount of charged electric power (154) may be performed regardless of whether the vehicle is traveling or stopped.

Further, a predicted arrival time that is the time of arrival at the next stopping station is necessary in the case of calculating the available charging time (254) while the vehicle is traveling, and various techniques can be adopted to calculate the predicted arrival time. For example, the predicted arrival time may be estimated based on the current position and the running curve, or may be estimated based on the current position and the travel timetable. Further, a determination as to whether or not the vehicle is stopped may be based on an open/closed state of a door device, or may be based on the current position and the vehicle speed.

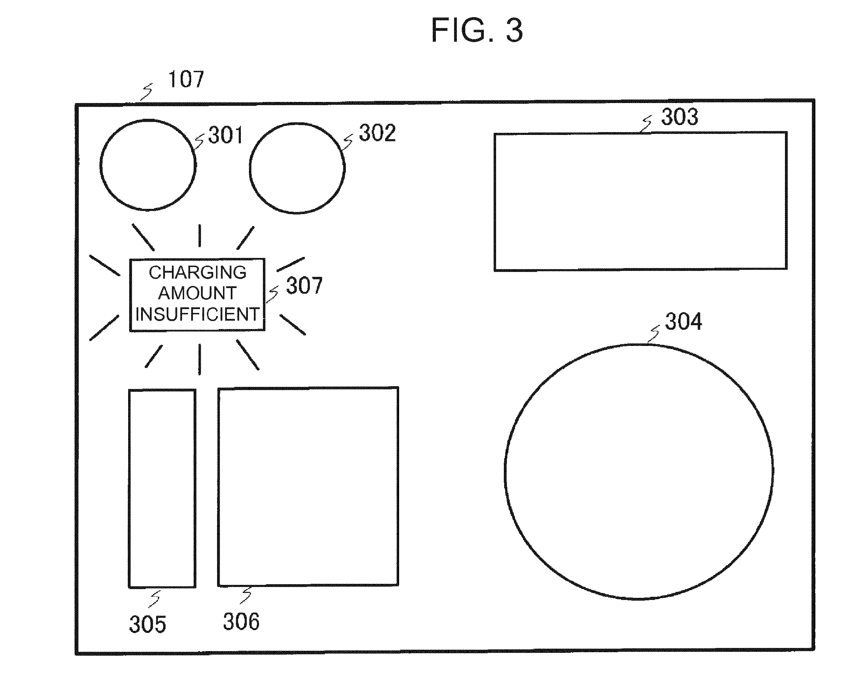

Display contents of the display device (107) according to Embodiment 1 are illustrated in FIG. 3.

The display device (107) includes: an area (301) that displays a voltage of an auxiliary power storage device that serves as a power source of a control device; an area (302) that displays a voltage of the power storage device (105) that is used as the motive power source of the vehicle; an area (303) that displays an operational status and a failure status of various apparatuses mounted in the vehicle; an area (304) that displays the vehicle speed; an area (305) that displays a brake notch that is notch level information with respect to a brake lever of a master controller that is provided in a cab; an area (306) that displays the operational status of the air brake; and a departure permission display area (307) that, in accordance with a display request from the vehicle control device (101), displays a notification that notifies the driver so as to block departure.

Note that, as constituent elements of the display device, in addition to the above described areas, areas may also be set that display the operational status of the door device of the vehicle, the operational status of air conditioning equipment, and a travel timetable or the like. The point is that it is sufficient if the departure permission display area (307) for supporting the driver is provided so as to secure the required amount of electric power that enables travel until the next charging facility is reached, and it does not matter what the configuration of other display areas is. Further, it does not matter what number of display devices (107) and departure permission display areas (307) are provided.

Upon receiving the display request (156), the display device (107) displays a predefined display on the departure permission display area (307). As the display contents, contents for blocking departure until it is possible to depart may be displayed, or a method may be adopted that displays contents that permit departure in a case where it has become possible to depart. Various forms can be adopted with respect to the text of the display contents and whether the display method involves a lit display or a flashing display or the like.

According to the present embodiment that is configured in this manner, after restricting the charging current for the power storage device (105) to a current that is less than or equal to the maximum charging current (259), support is performed in a form that displays to the driver the fact that the required amount of electric power that enables travel until the charging device (106) that is installed at the next stopping station or the like has been secured. Hence, travel until the next stopping station is reliably enabled while extending the life of the power storage device (105) by keeping the charging time period to the necessary minimum.

### [Embodiment 2]

Although in Embodiment 1, as support means for supporting so that the required amount of electric power is secured by means of the charging amount by the charging device (106), means is provided for displaying the fact that the required amount of electric power was secured on the display device (107), according to Embodiment 2 the time period until completion of charging is counted down and displayed on the display device (107).

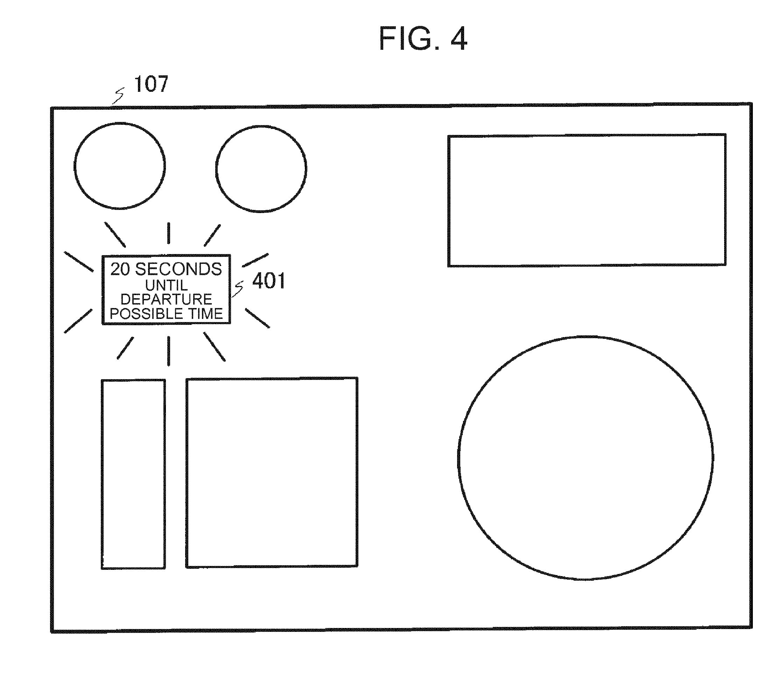

The display contents of the display device (107) of Embodiment 2 are shown in FIG. 4.

The display device (107) receives the display request (156) and the time period until charging will be completed from the vehicle control device (101). In a case where the required charging current (155) is equal to or less than the maximum charging current (259), the time period until charging will be completed is calculated based on the departure time from the stopping station and the current time (253), while in a case where the required charging current (155) is greater than the maximum charging current (259), the time period until charging will be completed is taken as is as the time period until completion of charging.

A charging completion countdown display area (401) is provided on the display device (107). During a period in which the display request (156) is being output, the time period until completion of charging is displayed in the charging completion countdown display area (401).

According to the present embodiment also, various forms can be adopted with respect to the text of the display contents and to whether the display is a lit display, a flashing display, a segment display or the like.

According to Embodiment 2, after restricting the charging current for the power storage device (105) to a current that is less than or equal to the maximum charging current (259), support is performed in a form that displays information to the driver that shows the driver the remaining number of minutes until the required amount of electric power that will enable arrival at the next charging facility will be secured. Hence, in addition to reliably enabling travel until the next stopping station while extending the life of the power storage device, since the driver can easily recognize when is a suitable time to depart, the driver can concentrate on the driving operations while leaving some time to spare.

### [Embodiment 3]

According to the present embodiment, as support means for supporting so that the required amount of electric power is secured by means of the charging amount from the charging device (106), means is provided for displaying an estimated time at which the required amount of electric power will be secured.

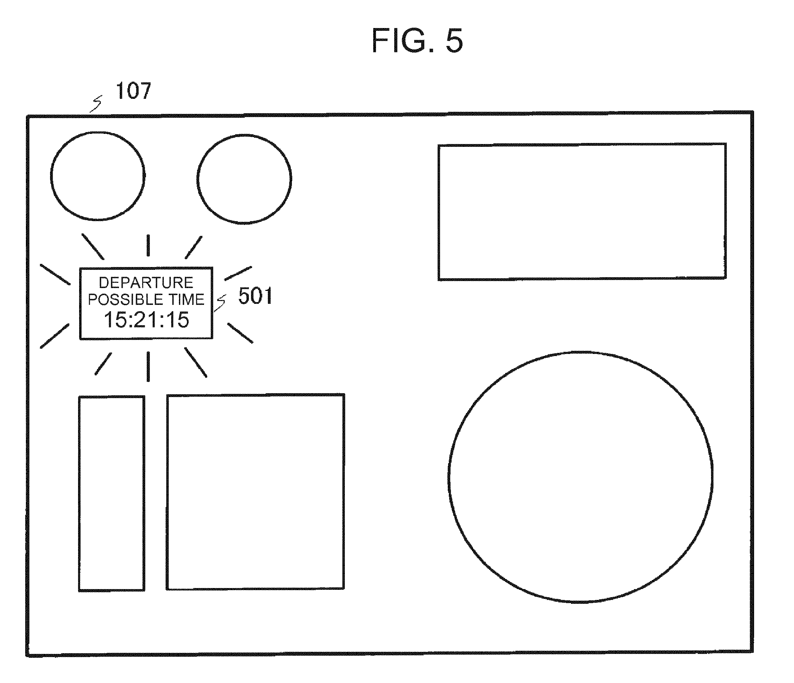

The display contents of the display device according to Embodiment 3 are shown in FIG. 5.

The display device (107) receives the display request (156) and a time at which charging will be completed from the vehicle control device (101). In a case where the required charging current (155) is equal to or less than the maximum charging current (259), the time at which charging will be completed is taken as the departure time from the stopping station, while in a case where the required charging current (155) is greater than the maximum charging current (259), the time at which charging will be completed is taken as a time that is calculated based on a time period until charging will be completed and the current time (253).

A departure possible time display area (501) is provided on the display device (107), and during a period in which the display request (156) is being output, the time at which charging will be completed is displayed in the departure possible time display area (501).

According to the present embodiment also, various forms can be adopted with respect to the text of the display contents and whether the display method involves a lit display, a flashing display, a segment display or the like.

According to the present embodiment also, similarly to Embodiments 1 and 2, in addition to reliably enabling travel as far as the next charging device (106) while extending the life of the power storage device, since the driver can easily recognize when is a suitable time to depart, the driver can concentrate on the driving operations while leaving some time.

In the above described Embodiments 1 to 3, as support means for supporting so that the required amount of electric power is secured by means of the charging amount by the charging device (106), means is adopted for displaying on the display device (107) a notification that notifies the driver to the effect of blocking departure, a time period until charging will be completed, or information showing the time at which charging will be completed, however a configuration may also be adopted so as to notify the driver by, for example, using sound or a button that is provided in the cab or the like.

In short, any configuration may be adopted as long as means is provided for easily allowing the driver to recognize when a suitable time to depart is.

### [Embodiment 4]

According to the present embodiment, as support means for supporting so that the required amount of electric power is secured by means of the charging amount from the charging device (106), means is provided for blocking departure of the vehicle in a state in which the required amount of electric power has not been charged.

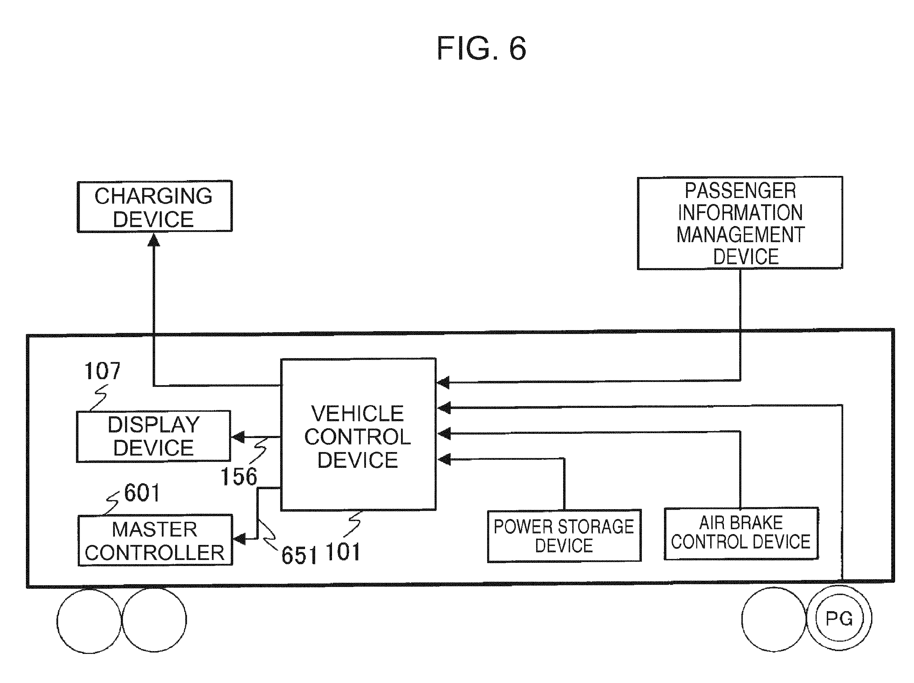

FIG. 6 illustrates an example of a system configuration diagram of Embodiment 4.

As shown in FIG. 2, in the vehicle control device 101, the display request determination portion (211) compares the required amount of electric power (258) and the current amount of charged electric power (154), and determines whether or not the current amount of charged electric power (154) is less than the required amount of electric power (258). In a case where the vehicle is stopped and the current amount of charged electric power (154) is less than the required amount of electric power (258), the vehicle control device (101) outputs the display request (156) to the display device (107) and, as shown in FIG. 6, outputs an acceleration prohibition request (651) to a master controller (601) provided in the cab.

Upon receiving the acceleration prohibition request (651), the master controller (601) locks so that the master controller (601) does not enter an acceleration position.

According to the present embodiment, in addition to the advantageous effects of Embodiments 1 to 3, even if the driver erroneously attempts to depart by operating the master controller (601) irrespective of the fact that a notification to the effect of blocking departure was notified to the driver, departure of the vehicle can be reliably prevented by the acceleration prohibition request (651).

### [Embodiment 5]

Similarly to Embodiment 4, according to Embodiment 5 the departure of the vehicle is also blocked in a state in which the required amount of electric power has not been charged, and according to the present embodiment a brake device is actuated.

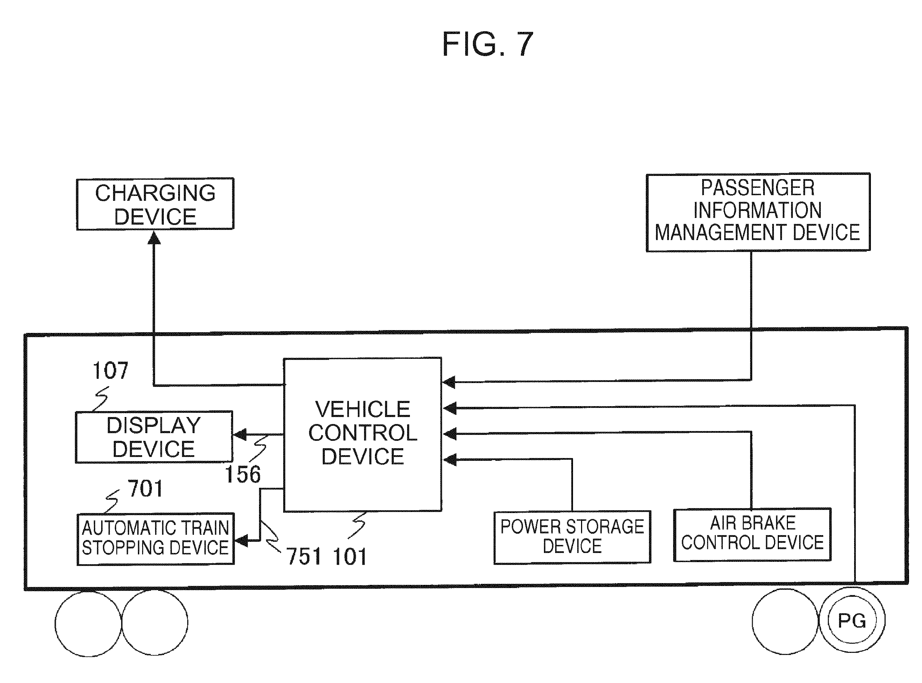

FIG. 7 illustrates an example of a system configuration diagram of Embodiment 5.

As shown in FIG. 2, in the vehicle control device 101, the display request determination portion (211) compares the required amount of electric power (258) and the current amount of charged electric power (154), and determines whether or not the current amount of charged electric power (154) is less than the required amount of electric power (258).

In a case where the vehicle is stopped and the current amount of charged electric power (154) is less than the required amount of electric power (258), the vehicle control device (101) outputs the display request (156) to the display device (107) and, as shown in FIG. 7, outputs a brake command (751) to an automatic train stopping device (701).

Upon receiving the brake command (751), the automatic train stopping device (701) outputs a brake command to a brake device so that the train cannot depart.

Note that, a device that outputs a brake command to the brake device may be a device other than the automatic train stopping device, and for example may be an automatic train operation device or an automatic train control device. Further, the vehicle control device (101) may be configured so as to directly output a brake command to the brake device.

According to the present embodiment, in addition to the advantageous effects of Embodiments 1 to 3, even if the driver erroneously attempts to depart by operating the master controller (601) irrespective of the fact that a notification to the effect of blocking departure was notified to the driver, it is possible to reliably prevent departure of the vehicle because the brake device is operating.

### [Embodiment 6]

According to the foregoing embodiments, as support means for supporting so that the required amount of electric power is secured by means of the charging amount from the charging device (106), means is adopted for blocking departure of the vehicle in a state in which the required amount of electric power is not charged. However, according to the present embodiment, in a case where, due to circumstances relating to the operation schedule or the like, vehicle departure must be performed in a state in which the required amount of electric power is not charged, a running curve that avoids sudden acceleration and high-speed traveling and enables travel until the next charging device (106) is reached is presented to the driver.

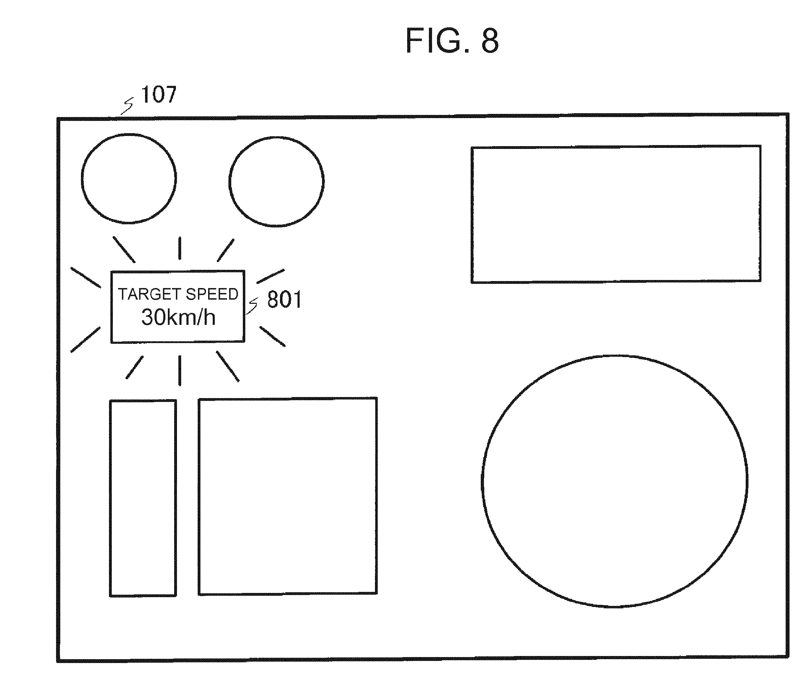

The display contents of a display device according to Embodiment 6 are shown in FIG. 8.

In a case where the vehicle has departed even though charging has not been completed, on the basis of the current amount of charged electric power (154), the traveling information (255), the current position (251), and the vehicle weight (153), the vehicle control device (101) calculates a running curve which enables the vehicle to reach the next station at which the next charging device is installed from the departure station at which the charging device (106) is installed. It is assumed that this running curve avoids unnecessary acceleration and deceleration as well as high-speed traveling in order to reduce power consumption.

A target vehicle speed display area (801) that displays a target vehicle speed that is determined based on the running curve that is calculated as described above is provided on the display device (107), and a target vehicle speed is displayed thereon.

Note that the target vehicle speed may be notified to the driver by a method other than displaying the target vehicle speed on a screen. For example, a configuration may be adopted that notifies the target vehicle speed to the driver by sound. Further, various forms can be adopted with respect to the text of the display contents and whether the display is a lit display, a flashing display, a segment display or the like.

In addition, the target vehicle speed display area (801) may be provided at the same position as the display areas described in Embodiments 1 to 3, or may be provided at a different position thereto. According to the present embodiment, even in a case where the driver erroneously causes the vehicle to depart even though the driver had been notified to the effect of blocking departure of the vehicle, it is possible for the vehicle to reliably travel as far as the next stopping station.

### [Embodiment 7]

According to the present embodiment, at the time of arrival at the present charging device (106), the amount of electric power that is required in order to depart from the next charging device and arrive at a subsequent charging device that is next after the next charging device is predicted in advance, and in a case where a predetermined stoppage time period at the next station at which the next charging device is installed will be exceeded in order to secure the aforementioned amount of electric power, the speed of the vehicle from the current charging device towards the next charging device is raised so that the vehicle arrives earlier than the scheduled time at the next station to thereby secure the charging time period and maintain the operational departure time from the next station.

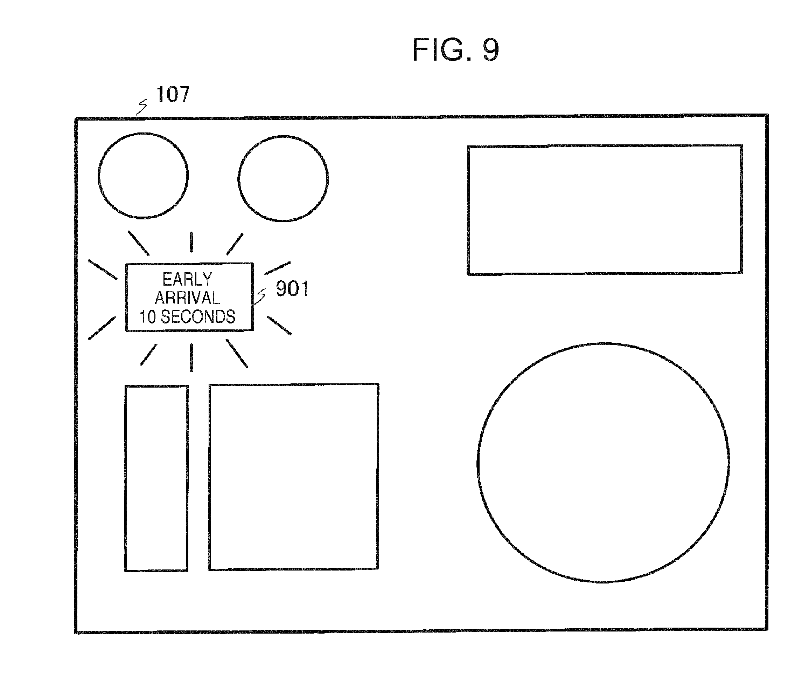

The display contents of the display device according to Embodiment 7 of the present invention are shown in FIG. 9.

The vehicle control device (101) includes second calculation means for calculating a stoppage time period at the next stopping station at which a charging device is installed and also calculating the required amount of electric power that is necessary in order to travel from the next stopping station to the subsequent stopping station thereafter at which the following charging device is installed.

The vehicle control device (101) determines whether or not it is possible to charge the required amount of electric power (258) during the stoppage time period at the next stopping station based on the amount of electric power that is necessary for traveling until the stopping station after the next stopping station, which was calculated by the second calculation means, and the maximum charging current

(259). The stoppage time period at the next stopping station may be calculated based on the predicted time of arrival at the next station that is determined based on the running curve to the next stopping station, and on the departure time from the next stopping station, or the required stoppage time period may be calculated based on the number of passengers boarding and alighting at the next stopping station. In short, it does not matter which principle is adopted to ascertain the stoppage time period as long as the vehicle control device (101) can ascertain the stoppage time period at the next stopping station.

If the vehicle control device (101) determines that it is not possible to charge the required amount of charged electric power during the stoppage time period at the next stopping station, the vehicle control device (101) notifies the driver to the effect of informing the driver to arrive at the next stopping station ahead of schedule.

An early arrival request display area (901) that displays information to the effect of informing the driver to arrive at the next stopping station ahead of schedule is provided on the display device (107). The early arrival request may be notified to the driver by a method other than displaying the request on a screen. For example, the early arrival request may be notified to the driver by sound or a button display may be provided.

Note that, in the present embodiment also, the text of the display contents and whether the display method involves a lit display or a flashing display or the like are not particularly limited. In addition, the early arrival request display area (901) may be provided at the same position as the display areas described in Embodiments 1 to 3, or may be provided at a different position thereto. According to the present embodiment, in addition to the above described embodiments, as well as enabling reliable travel as far as the next stopping station while extending the life of the power storage device, it is possible to cause the vehicle to depart at the scheduled time from the next stopping station.

### [Embodiment 8]

In the foregoing embodiments, configurations in which charging is performed while the vehicle is stopped have been described on the premise that charging facilities are installed at stopping stations.

According to the present embodiment, a case of a partial catenary-less transportation system in which a charging facility of a certain length such as a catenary is also installed at a partial section between stopping stations is described.

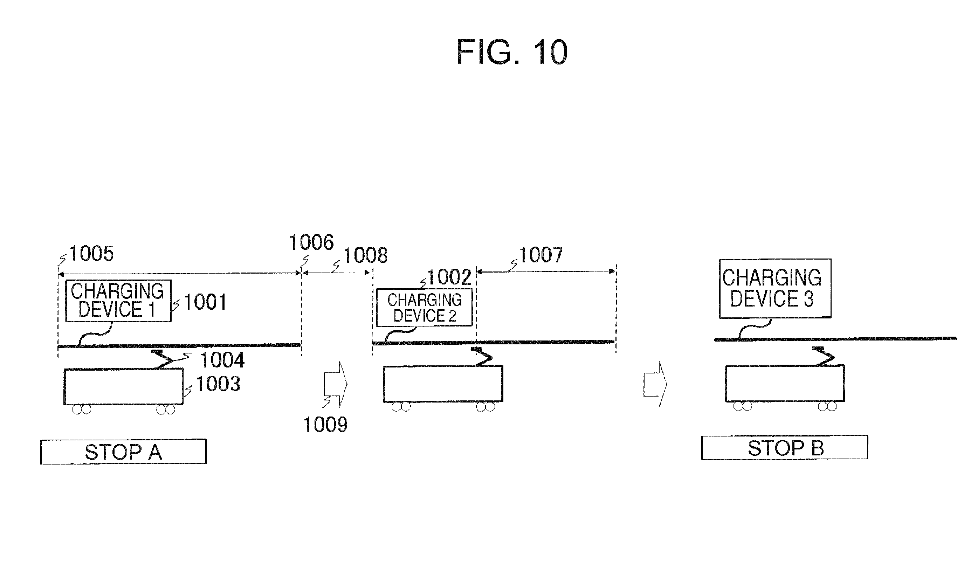

FIG. 10 illustrates the system configuration of the partial catenary-less transportation system.

A charging device 1 (1001) that is installed in the vicinity of a stopping station and a charging device 2 (1002) that is installed between stations are installed as charging facilities.

While traveling past the charging device 1 (1001) and the charging device 2 (1002), a vehicle (1003) performs charging from the respective charging devices through a power collecting device (1004).

In this case, a position at the beginning of the respective charging devices is taken as a charging device entrance kilometer marker (1005), and a position at the end of the respective charging devices is taken as a charging device exit kilometer marker (1006). Charging from the charging device is possible when the vehicle (1003) is present between the charging device entrance kilometer marker (1005) and the charging device exit kilometer marker (1006).

Further, a distance between the current kilometer marker of the vehicle (1003) and the charging device exit kilometer marker is an available charging distance (1007).

In the case of the charging device 1 (1001), charging is possible when the vehicle is stopped at the station and when the vehicle is accelerating or decelerating, and in the case of the charging device 2 (1002) charging is possible while the vehicle (1003) is traveling.

Note that it is assumed that a catenary-less section that is a section without a catenary exists in which the charging device 1 (1001) and the charging device 2 (1002) are not directly connected.

In a catenary-less section (1008), the vehicle (1003) performs catenary-less traveling (1009) using electric power of a power storage device that is mounted in the vehicle (1003), and the term "next trip" in a case of performing charging by the charging device 1 (1001) refers to catenary-less traveling (1009) until arriving at the next charging device 1 (1001) or charging device 2 (1002).

Note that, with respect to the charging method, apart from performing charging through the power collecting device (1004), for example, a wireless power feeding method may also be used. In short, it does not matter whether the charging method is a contact method or a non-contact method as long as the vehicle (1003) can be charged.

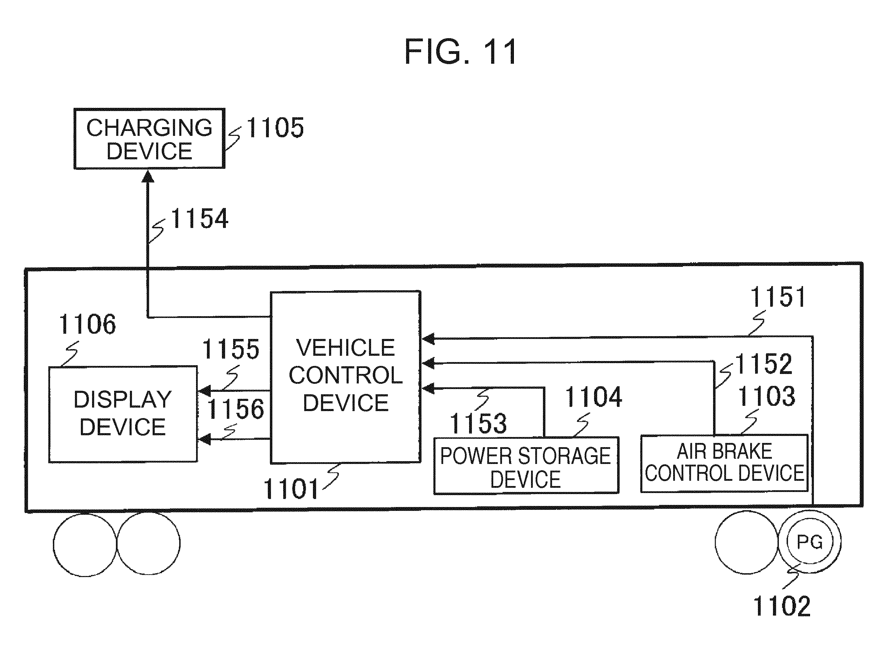

The system configuration of Embodiment 8 is illustrated in FIG. 11.

A vehicle control device (1101) acquires a vehicle speed (1151) from a speed sensor (1102) such as a pulse generator that is mounted on an end of a rotary shaft of an electric motor or an end of an axle.

The vehicle control device (1101) integrates the vehicle speed (1151), and uses the integrated value to determine the current position of the vehicle.

In the present embodiment, the point is that the vehicle control device (1101) can acquire the vehicle speed (1151), and it does not matter what the acquisition source is. Further, apart from integrating the vehicle speed (1151), determination of the current position may be performed by, for example, acquiring the current position directly from an operation management device, and it does not matter what the means for determining the current position is as long as the vehicle control device (1101) can ascertain the current position.

Next, the vehicle control device (1101) acquires a vehicle weight (1152) from an air brake control device (1103). The vehicle weight (1152) is calculated using a weight sensor that is attached to the vehicle, for example, a pressure sensor that is provided inside an air spring that controls the height of the vehicle utilizing the air pressure. Although the vehicle weight (1152) is generally acquired from the aforementioned air brake control device (1103), the vehicle weight (1152) may be directly acquired from an air spring, and the point is that the vehicle weight (1152) can be acquired, and it does not matter what device and principle are used for calculating the vehicle weight (1152).

Next, the vehicle control device (1101) acquires a current amount of charged electric power (1153) that is the amount of charged electric power at the current time point from the power storage device (1104). Note that, the current amount of charged electric power (1153) may also be acquired using other means, such as by estimation based on the voltage of the power storage device, or for example, may be estimated based on an integrated value of the amount of output electric power and an integrated value of the amount of charged electric power. In the present embodiment also, a principle adopted to acquire the current amount of charged electric power (1153) is not particularly limited as long as it is possible for the vehicle control device (1101) to acquire the current amount of charged electric power (1153).

The vehicle control device (1101) calculates the required amount of charged electric power based on the vehicle speed (1151), the vehicle weight (1152) and the current amount of charged electric power (1153), and calculates a required charging current (1154) per unit of time based on the required amount of charged electric power for enabling the catenary-less traveling (1009) and the maximum charging current that is defined in accordance with the life of the power storage device (1104).

The vehicle control device (1101) then sends the required charging current (1154) to a charging device (1105) that controls charging to the power storage device (1104). The charging device (1105) carries out charging of the power storage device (1104) based on the required charging current (1154).

In the present embodiment, all devices that are capable of controlling charging to the power storage device correspond to the charging device (1105), and an installation location and form of the charging device (1105) is not particularly limited. Further, the acquisition method may be a wired or a wireless method as long as it is possible for the charging device (1105) to acquire the required charging current (1154).

In a case where the required amount of charged electric power cannot be charged with the current charging device (1105), it is necessary to secure the charging time period by lowering the vehicle speed or the like. At such time, the vehicle control device (1101) sends a display request (1155) and a target vehicle speed (1156) to a display device (1106) to inform the driver to lower the vehicle speed. Upon receiving the display request (1155), the display device (1106) displays a predetermined notification such as a deceleration notification.

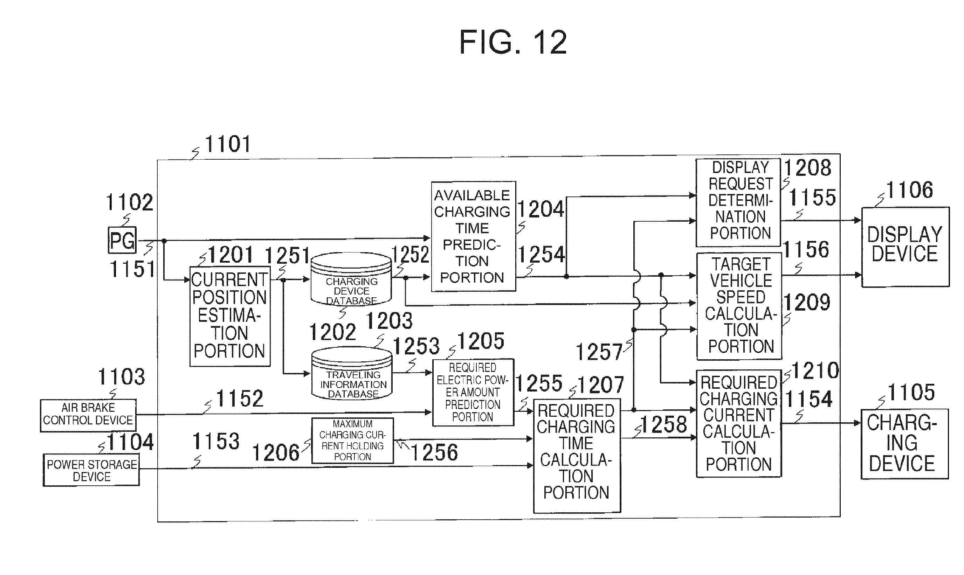

The detailed processing flow inside the vehicle control device (1101) according to Embodiment 8 will now be described using FIG. 12 that illustrates the system configuration thereof.

A current position estimation portion (1201) acquires the vehicle speed (1151) from the speed sensor (1102), calculates a travelled distance by performing time integration with respect to the vehicle speed (1151), and estimates a current position (1251) of its own vehicle. It is possible to accurately estimate the current position by correcting the current position at a predetermined kilometer marker of the stopping station each time the vehicle stops at a station.

A charging device database (1202) holds information regarding positions of the charging devices (1105) and the length of the charging devices, and identifies the current charging device based on the current position (1251), and sends an available charging distance (1252) of the current charging device to an available charging time prediction portion (1204) and a target vehicle speed calculation portion (1209).

A traveling information database (1203) holds traveling information such as information regarding gradients, curvature radii, running curves, and stopping station information. The traveling information database (1203) determines the next stopping station based on the current position (1251), and sends traveling information (1253) regarding travel as far as the next stopping station to a required electric power amount prediction portion (1205).

The available charging time prediction portion (1204) predicts an available charging time (1254) that is a time period in which charging can be performed at the current charging device based on the vehicle speed (1151) and the available charging distance (1252), and sends the available charging time (1254) to a display request determination portion (1208) and the target vehicle speed calculation portion (1209).

The required electric power amount prediction portion (1205) calculates the kinetic energy and the traveling resistance energy based on the traveling information (1253) and the vehicle weight (1152), and predicts the amount of electric power required for the next trip while also taking into account the amount of electric power used for accessory equipment such as air conditioning equipment. Although in the present embodiment the required electric power amount prediction portion (1205) sends the required amount of electric power (1255) that is predicted to the required charging time calculation portion (1207), the point is that the amount of electric power that is necessary for the next trip can be predicted, and it does not matter what principle is adopted for prediction thereof.

The required charging time calculation portion (1207) acquires a maximum charging current (1256) from a maximum charging current holding portion (1206) that holds a maximum charging current that is defined based on the life of the power storage device (1104).

The required charging time calculation portion (1207) then calculates a required amount of charged electric power (1258) that is the amount of electric power that should be charged for the next trip based on the required amount of electric power (1255) and the current amount of charged electric power (1153), and divides the required amount of charged electric power (1258) by the maximum charging current (1256) and the charging voltage to calculates a required charging time (1257) that is a time period necessary to charge the required amount of charged electric power (1258).

Next, the required charging time calculation portion (1207) sends the required charging time (1257) to the display request determination portion (1208) and a required charging current calculation portion (1210), and sends the required amount of charged electric power (1258) to the required charging current calculation portion (1210).

The display request determination portion (1208) compares the available charging time (1254) and the required charging time (1257), and if the available charging time (1254) is less than the required charging time (1257), since that fact means that the required amount of charged electric power (1258) cannot be charged at the current charging device (1105), the display request determination portion (1208) sends the display request (1155) to the display device (1106).

The target vehicle speed calculation portion (1209) compares the available charging time (1254) and the required charging time (1257), and if the available charging time (1254) is less than the required charging time (1257), the target vehicle speed calculation portion (1209) divides the available charging distance (1252) by the required charging time (1257) to calculate the target vehicle speed (1156).

On the other hand, if the available charging time (1254) exceeds the required charging time (1257), the target vehicle speed calculation portion (1209) divides the available charging distance (1252) by the available charging time (1254) to calculate the target vehicle speed (1156). In this case, the target vehicle speed (1156) becomes equal to the current vehicle speed (1151). Next, the target vehicle speed calculation portion (1209) outputs the target vehicle speed (1156) that was calculated to the display device (1106).

The required charging current calculation portion (1210) compares the available charging time (1254) and the required charging time (1257), and if the available charging time (1254) is less than the required charging time (1257), the required charging current calculation portion (1210) divides the required amount of charged electric power (1258) by the required charging time (1257) and the charging voltage to thereby calculate the required charging current (1154) per unit of time. In this case, the required charging current (1154) becomes equal to the maximum charging current (1256).

If the available charging time (1254) exceeds the required charging time (1257), the required charging current calculation portion (1210) divides the required amount of charged electric power (1258) by the available charging time (1254) and the charging voltage to thereby calculate the required charging current (1154) per unit of time. Next, the required charging current calculation portion (1210) sends the required charging current (1154) to the charging device (1105).

Although according to the present embodiment a configuration has been described that performs charging at a constant speed, a configuration may also be adopted in which charging is performed while accelerating or decelerating. In that case, the available charging time is calculated based on the accelerating/decelerating state, the traveling information (1253) and the available charging distance (1252).

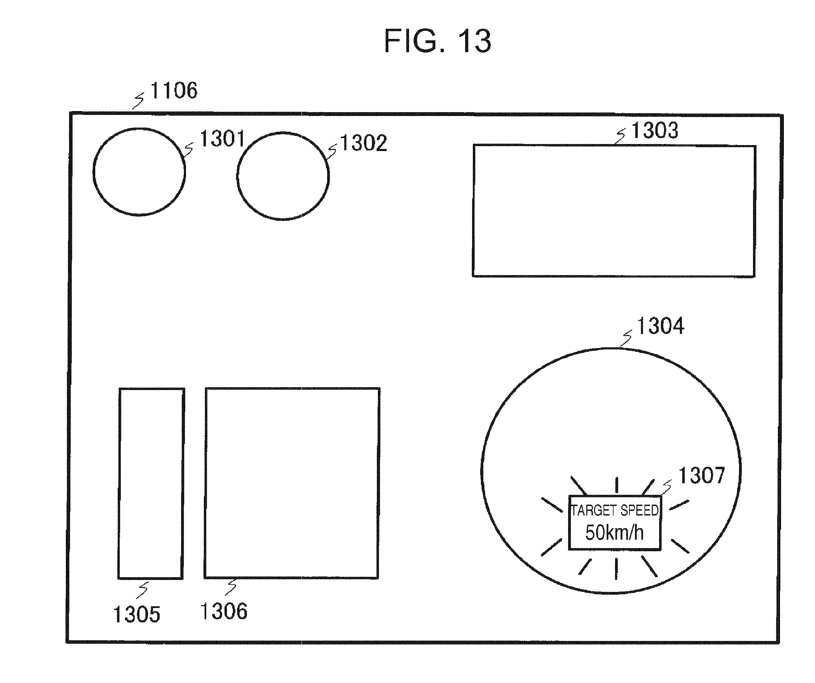

The display contents of the display device (1106) according to Embodiment 8 are illustrated in FIG. 13.

The display device (1106) includes an area (1301) that displays a voltage of an auxiliary power storage device that serves as a power source of a control device; an area (1302) that displays a voltage of the power storage device that is used as a motive power source of the vehicle; an area (1303) that displays an operational status and a failure status of various apparatuses mounted in the vehicle; an area (1304) that displays the vehicle speed; an area (1305) that displays a brake notch that is notch level information with respect to a brake lever of a master controller that is provided in a cab; an area (1306) that displays the operational status of the air brake; and a target vehicle speed display area (1307) that, in accordance with a display request from the vehicle control device (1101), notifies the target vehicle speed (1156) to the driver.

Note that, as constituent elements of the display device, in addition to the above described areas, areas may also exist that display the operational status of the door device of the vehicle, the operational status of air conditioning equipment, and a travel timetable or the like. According to the present invention it is sufficient that the target vehicle speed display area (1307) is provided, and the configuration of other display areas is not particularly limited. Further, it does not matter what number of display devices are provided.

Upon receiving the display request (1155), the display device (1106) displays the target vehicle speed (1156) in the target vehicle speed display area (1307). The target vehicle speed (1156) may also be notified to the driver by a method other than displaying the target vehicle speed on a screen. For example, a configuration may be adopted in which the target vehicle speed is notified to the driver by sound.

Note that, in the present embodiment also, the text of the display contents and whether the display method involves a lit display or a flashing display or the like are not particularly limited according to the invention.

According to the present embodiment, at the charging device 1 (1001) or the charging device 2 (1002), by suppressing the charging current to a current that is less than or equal to the maximum charging current, it is possible to reliably perform the catenary-less traveling (1009) and travel as far as the next stopping station while extending the life of the power storage device.

### Industrial Applicability

As described above, according to the present invention, since charging is performed so as not to exceed a maximum charging current that is defined based on the life of a power storage device, it is possible to extend the life of the power storage device. Furthermore, by performing support such as notifying the driver whether or not a charging amount that is necessary for the next trip has been charged, in particular in a region which is not adequately equipped with a catenary infrastructure, catenary-less traveling which has a high level of stability and reliability can be ensured, and thus it can be anticipated that the present invention will be widely adopted as a vehicle control system that realizes catenary-less traveling that provides a high level of environmental performance.

### Reference Signs List

- 101: Vehicle control device
- 102: Passenger information management device
- 103: Speed sensor
- 104: Air brake control device
- 105: Power storage device
- 106: Charging device
- 107: Display device
- 151: Passenger information
- 152: Vehicle speed
- 153: Vehicle weight
- 154: Current amount of charged electric power
- 155: Required charging current
- 156: Display request
- 201: Current position estimation portion
- 202: Travel timetable database
- 203: Available charging time prediction portion
- 204: Time information holding portion
- 205: Traveling information database
- 206: Required electric power amount prediction portion
- 207: Number of passengers boarding/alighting prediction portion
- 208: Vehicle weight prediction portion
- 209: Required charging current calculation portion
- 210: Maximum charging current holding portion
- 211: Display request determination portion
- 251: Current position
- 252: Departure time
- 253: Current time
- 254: Available charging time
- 255: Traveling information
- 256: Number of passengers boarding/alighting information
- 257: Predicted vehicle weight
- 258: Required amount of electric power
- 259: Maximum charging current
- 301: Area that displays voltage of auxiliary power storage device
- 302: Area that displays voltage of power storage device
- 303: Area that displays operational status and failure status of various apparatuses
- 304: Area that displays vehicle speed
- 305: Area that displays brake notch
- 306: Area that displays operational status of air brake
- 307: Departure permission display area
- 401: Charging completion countdown display area
- 501: Departure possible time display area
- 601: Master controller
- 651: Acceleration prohibition request
- 701: Automatic train stopping device
- 751: Brake command
- 801: Target vehicle speed display area
- 901: Early arrival request display area
- 1001: Charging device 1
- 1002: Charging device 2
- 1003: Vehicle
- 1004: Power collecting device
- 1005: Charging device entrance kilometer marker
- 1006: Charging device exit kilometer marker
- 1007: Available charging distance
- 1008: Catenary-less section
- 1009: Catenary-less traveling
- 1101: Vehicle control device
- 1102: Speed sensor
- 1103: Air brake control device
- 1104: Power storage device
- 1105: Charging device
- 1106: Display device
- 1151: Vehicle speed
- 1152: Vehicle weight
- 1153: Current amount of charged electric power
- 1154: Required charging current
- 1155: Display request
- 1156: Target vehicle speed
- 1201: Current position estimation portion
- 1202: Charging device database
- 1203: Traveling information database
- 1204: Available charging time prediction portion
- 1205: Required electric power amount prediction portion
- 1206: Maximum charging current holding portion
- 1207: Required charging time calculation portion
- 1208: Display request determination portion
- 1209: Target vehicle speed calculation portion
- 1210: Required charging current calculation portion
- 1251: Current position
- 1252: Available charging distance
- 1253: Traveling information
- 1254: Available charging time
- 1255: Required amount of electric power
- 1256: Maximum charging current
- 1257: Required charging time
- 1258: Required amount of charged electric power
- 1301: Area that displays voltage of auxiliary power storage device
- 1302: Area that displays voltage of power storage device
- 1303: Area that displays operational status and failure status of various apparatuses
- 1304: Area that displays vehicle speed
- 1305: Area that displays brake notch
- 1306: Area that displays operational status of air brake
- 1307: Target vehicle speed display area

## Claims

1. A vehicle control system for a vehicle in which a power storage device is mounted and which receives a supply of electric power from a charging facility that is installed aboveground, and is capable of traveling on a set route such as on a railroad track or a road surface by utilizing the power storage device as a motive power source, the vehicle control system comprising:
calculation means for, when the vehicle arrives at one charging facility, calculating a required amount of electric power to enable travel until a next charging facility is reached; and
support means for supporting so that, after restricting a charging current from the charging facility at which the vehicle arrives to a current that is less than or equal to a maximum charging current that is defined based on a life of the power storage device, the required amount of electric power that is calculated by the calculation means is secured by means of a charging amount from the charging facility.

2. The vehicle control system according to claim 1, wherein the vehicle control system calculates the required amount of electric power based on a gradient, a curvature radius and a running curve along a route until a next charging facility is reached as well as a vehicle weight that is predicted with respect to the route, and determines whether or not the required amount of electric power is charged by performing a comparison with a current state of charge of the power storage device.

3. The vehicle control system according to claim 1, further comprising: a memory device in which the required amount of electric power is stored; wherein the vehicle control system corrects the required amount of electric power that is stored in the memory device by means of a vehicle weight that is predicted with respect to a route until a next charging facility is reached, and determines whether or not the corrected required amount of electric power is charged by performing a comparison with a current state of charge of the power storage device.

4. The vehicle control system according to any one of claims 1 to 3, wherein the support means is means for notifying a driver in a case where it is determined that the required amount of electric power is not charged.

5. The vehicle control system according to any one of claims 1 to 3, wherein the support means is means for, in a case where the vehicle is stopped and the required amount of electric power is not charged, locking a master controller of the vehicle so that the master controller does not move to an acceleration position to thereby block departure of the vehicle.

6. The vehicle control system according to any one of claims 1 to 3, wherein the support means is means for, in a case where the vehicle is stopped and the required amount of electric power is not charged, outputting a brake command to a brake device of the vehicle to thereby block departure of the vehicle.

7. The vehicle control system according to any one of claims 1 to 3, wherein the support means is means for, at a time of departure of the vehicle, in a case where an amount of electric power that is required in order to travel according to a running curve that is set with respect to a route until a next charging facility is reached is not charged, notifying to a driver a running curve that enables the vehicle to reach the next charging facility using a state of charge of the power storage device at the time of departure of the vehicle.

8. The vehicle control system according to any one of claims 1 to 3, further comprising:
second calculation means for, at a time of departure of the vehicle, calculating a required amount of electric power that enables travel from the next charging facility until reaching a subsequent charging facility that is next after the next charging facility;
wherein the support means is means for, in a case where a required amount of electric power that the second calculation means calculates cannot be charged within a predetermined charging time period at the next charging facility, notifying a driver so as to arrive earlier than scheduled at the next charging facility to secure a charging time period at the next charging facility.

9. The vehicle control system according to any one of claims 1 to 3, wherein:
the charging facility is provided in a predetermined section of a route that links stopping points of the vehicle; and
the support means is means for calculating a vehicle speed at a time of traveling past a current charging facility so that the required amount of electric power can be secured by means of the charging facility that the vehicle is currently traveling past, and notifying the vehicle speed to a driver.

10. The vehicle control system according to claim 9, wherein the support means is means for calculating a vehicle speed at which the required amount of electric power can be secured by means of the charging facility that the vehicle is currently traveling past, based on a current vehicle speed, a current position, and a section length of the current charging facility.

## Amended claims

### Amended claims under Art. 19.1 PCT

**1.** (Amended) A vehicle control system for a vehicle in which a power storage device is mounted and which receives a supply of electric power from a charging facility that is installed aboveground, and is capable of traveling on a set route such as on a railroad track or a road surface by utilizing the power storage device as a motive power source, the vehicle control system comprising:
calculation means for, when the vehicle arrives at one charging facility, calculating a required amount of electric power to enable travel until a next charging facility is reached;
support means for supporting so that, after restricting a charging current from the charging facility at which the vehicle arrives to a current that is less than or equal to a maximum charging current that is defined based on a life of the power storage device, the required amount of electric power that is calculated by the calculation means is secured by means of a charging amount from the charging facility; and
a memory device in which the required amount of electric power is stored;
wherein the vehicle control system corrects the required amount of electric power that is stored in the memory device by means of a vehicle weight that is predicted with respect to a route until the next charging facility is reached, and determines whether or not the corrected required amount of electric power is charged by performing a comparison with a current state of charge of the power storage device.

**2.** The vehicle control system according to claim 1, wherein the vehicle control system calculates the required amount of electric power based on a gradient, a curvature radius and a running curve along a route until a next charging facility is reached as well as a vehicle weight that is predicted with respect to the route, and determines whether or not the required amount of electric power is charged by performing a comparison with a current state of charge of the power storage device.

**3.** Cancel)

**4.** (Amended) The vehicle control system according to claim 1 or 2, wherein the support means is means for notifying a driver in a case where it is determined that the required amount of electric power is not charged.

**5.** (Amended) The vehicle control system according to claim 1 or 2, wherein the support means is means for, in a case where the vehicle is stopped and the required amount of electric power is not charged, locking a master controller of the vehicle so that the master controller does not move to an acceleration position to thereby block departure of the vehicle.

**6.** (Amended) The vehicle control system according to claim 1 or 2, wherein the support means is means for, in a case where the vehicle is stopped and the required amount of electric power is not charged, outputting a brake command to a brake device of the vehicle to thereby block departure of the vehicle.

**7.** (Amended) The vehicle control system according to claim 1 or 2, wherein the support means is means for, at a time of departure of the vehicle, in a case where an amount of electric power that is required in order to travel according to a running curve that is set with respect to a route until a next charging facility is reached is not charged, notifying to a driver a running curve that enables the vehicle to reach the next charging facility using a state of charge of the power storage device at the time of departure of the vehicle.

**8.** (Amended) The vehicle control system according to claim 1 or 2, further comprising:
second calculation means for, at a time of departure of the vehicle, calculating a required amount of electric power that enables travel from the next charging facility until reaching a subsequent charging facility that is next after the next charging facility;
wherein the support means is means for, in a case where a required amount of electric power that the second calculation means calculates cannot be charged within a predetermined charging time period at the next charging facility, notifying a driver so as to arrive earlier than scheduled at the next charging facility to secure a charging time period at the next charging facility.

**9.** (Amended) The vehicle control system according to claim 1 or 2, wherein:
the charging facility is provided in a predetermined section of a route that links stopping points of the vehicle; and
the support means is means for calculating a vehicle speed at a time of traveling past a current charging facility so that the required amount of electric power can be secured by means of the charging facility that the vehicle is currently traveling past, and notifying the vehicle speed to a driver.

**10.** The vehicle control system according to claim 9, wherein the support means is means for calculating a vehicle speed at which the required amount of electric power can be secured by means of the charging facility that the vehicle is currently traveling past, based on a current vehicle speed, a current position, and a section length of the current charging facility.
